# EUROPEAN PATENT APPLICATION

(11) **EP 1 462 680 A1**
(43) Date of publication of application: **29.09.2004**
(21) Application number: 04251779.7
(22) Date of filing: 26.03.2004
(51) Int. Cl.: F16H 55/36

(54) **Power transmission**

(30) Priority: 27.03.2003 JP 2003089088
(71) Applicant: Fujikiko Kabushiki Kaisha, Kosai-shi, Shizuoka-ken (JP)
(72) Inventor: Matsuno, Mitsuyoshi Fujikiko Kabushiki Kaisha, Kosai-shi Shizuoka-ken (JP)
(74) Representative: Edwards, David Harvey Lloyd (GB)

(57) **Abstract**

The power transmission comprises a pulley, a damper and a driver. The pulley has a hub, a web and a belt-wound portion. The hub is formed into the shape of a cylinder. The web extends outward from an outer surface of the hub. The belt-wound portion is formed into the shape of a cylinder and extends from an external circumferential edge of the web along the axial direction of the hub. The damper is disposed in the interior of an annular recess which is formed out of an outer surface of the hub, an end surface of the web and an inner surface of the belt-wound portion, and is fixed to the pulley. The driver is connected to the pulley at vertex portions thereof. The recess of the pulley is open towards the driver.

## Description

### BACKGROUND OF THE INVENTION

### 1. Field of the Invention

The present invention relates to a power transmission provided with a damper in the middle of the power transmitting line.

### 2. Description of the Related Art

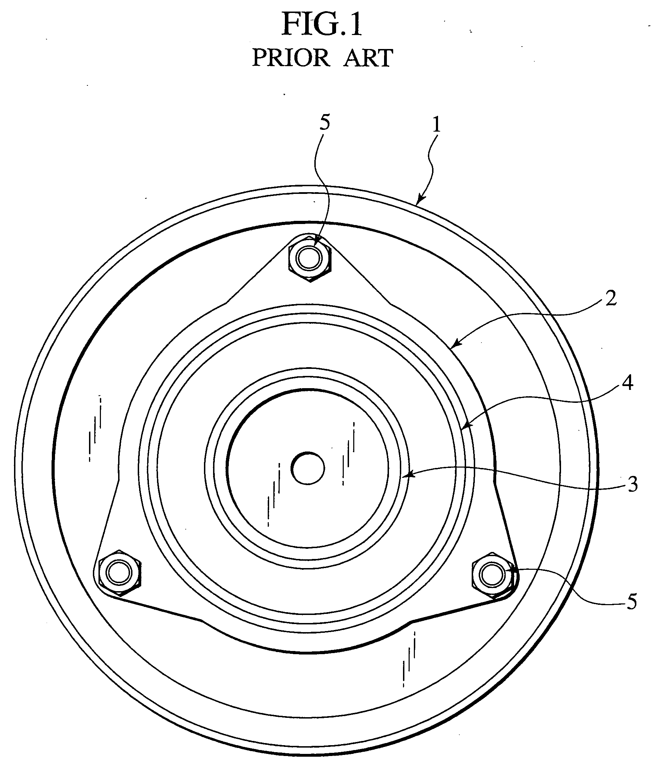

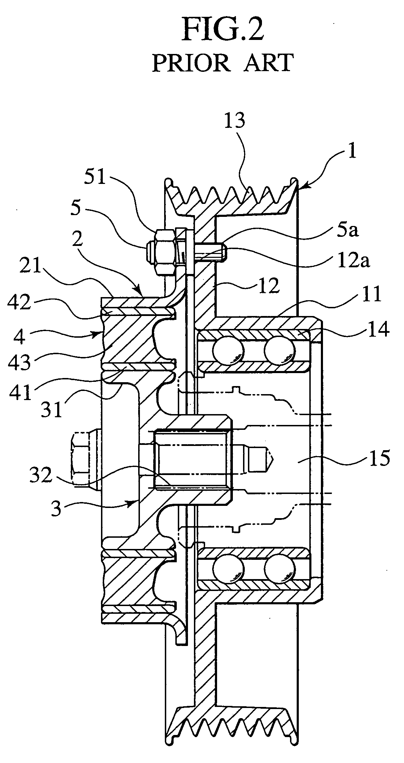

A conventional power transmission is disclosed in Japanese Patent Provisional Publication 2001-227560. As shown in FIGS.1 and 2, the power transmission is comprised of a pulley 1, a plate 2, a driver 3, a damper 4 and a shear pin 5.

The pulley 1 is rotated by torque transmitted via a belt (not shown in the figures) from an engine. The pulley 1 includes a hub 11, a web 12 and a belt-wound portion 13. The hub 11 is formed into the shape of a cylinder and coaxial with an input shaft 15 of a compressor. The web 12 is formed integrally on an external circumferential surface of an end portion of the hub 11 and also formed into the shape of an annular ring extending outward in the radial direction of the hub 11. The belt-wound portion 13 is formed integrally on an edge of the external circumference of the web 12. Also, the belt-wound portion 13 is formed in to the shape of a cylinder and coaxial with the hub 11.

The plate 2 and the driver 3 have cylindrical portions 21, 31 extending in the direction opposite to the pulley 1, respectively. The damper 4 includes circular rings 41, 42 and an elastic rubber 43. The elastic rubber 43 is formed into the shape of a cylinder and disposed in between the cylindrical portions 21, 31. The circular rings 41, 42 are connected to an inner surface and an outer surface of the elastic rubber 43, respectively. An assembly of the circular rings 41, 42 and the elastic rubber 43 is forcibly inserted between the cylindrical portions 21 and 31. The circular ring 41, 42 and the elastic rubber 43 are coaxial with the hub 11. According to such a construction, the elastic rubber 43 is fixed to the cylindrical portions 21 and 31 by the circular rings 41, 42.

The shear pin 5 is fixed to the plate 2 with a nut 51. A parallel portion 5a of the shear pin 5 is fitted into a through-hole 12a formed in the web 12. Further, the parallel portion 5a will be sheared off when the engine or the compressor is overloaded.

The hub 11 is held in a housing of the compressor via a bearing 14. The driver 3 is spline-coupled with the input shaft 15 of the compressor via a coupling hole 32 provided along the axial direction of the driver 3. Specifically, the compressor is a coolant compressor for use in refrigeration cycles of an automobile air conditioner.

In the power transmission constituted as above, the torque of the engine is transmitted to the belt-wound portion 13 via the belt and then will be sequentially transmitted via the web 12, the shear pin 5, the plate 2, the damper 4, the driver 3 and the input shaft 15 of the compressor. Since the damper 4 absorbs fluctuation in the torque during the torque transmission, smooth rotation of the engine and the compressor and reduction in noises can be achieved. Further, when the engine or the compressor is overloaded, the parallel portion 5a of the shear pin 5 is sheared off to protect the damper 4 from damage due to torsion in the rotational direction.

However, with regard to the conventional power transmission, since the damper 4 is fixed between the cylindrical portions 21 and 31 extending in the direction opposite to the pulley 1, there remains a problem that a length in the axial direction of the power transmission turns longer.

### SUMMARY OF THE INVENTION

The object of the present invention is to provide a power transmission having a shorter length in the axial direction thereof than those of conventional power transmissions.

In order to achieve the above object, the present invention provides A power transmission comprising: a pulley rotated by torque transmitted from a driving power source, wherein the pulley having a cylindrical hub connected to a housing of a compressor therein, an annular web extending outward from an outer surface of the hub, and a cylindrical belt-wound portion extending from an external circumferential edge of the web along the axial direction of the hub; a damper fixed to the pulley and disposed in the interior of a recess which is formed out of an outer surface of the hub, an end surface of the web and an inner surface of the belt-wound portion; and a polygonal driver connected to the damper and fixed to an input shaft of the compressor at the center of gravity thereof, wherein the recess is open towards the driver.

According to the present invention, since the damper is disposed in the annular recess of the pulley, the power transmission has a shorter length in the axial direction thereof than those of conventional power transmissions.

### BRIEF DESCRIPTION OF THE DRAWINGS

FIG.1 is a front view of a conventional power transmission.
FIG.2 is a cross sectional view of the conventional power transmission.
FIG.3 is a front view of a power transmission pertaining to a first embodiment of the present invention.
FIG.4 is a cross sectional view of the power transmission pertaining to the first embodiment of the present invention.
FIG.5 is a V -arrow view in FIG.4 of the power transmission pertaining to the first embodiment of the present invention.
FIG.6 is a front view of a power transmission pertaining to a second embodiment of the present invention.
FIG.7 is a cross sectional view of the power transmission pertaining to the second embodiment of the present invention.
FIG.8 is a VIII-arrow view in FIG.7 of the power transmission pertaining to the second embodiment of the present invention.
FIG.9 is a front view of a power transmission pertaining to a third embodiment of the present invention.
FIG.10 is a cross sectional view of the power transmission pertaining to the third embodiment of the present invention.
FIG.11 is a front view of a power transmission pertaining to a fourth embodiment of the present invention.
FIG.12 is a cross sectional view of the power transmission pertaining to the fourth embodiment of the present invention.

### DESCRIPTION OF THE PREFFERED EMBODIMENT

First to fourth embodiments of a power transmission according to the present invention will be described below. Besides, the X-axis, the Y-axis and the Z-axis are respectively set in the longitudinal direction, the lateral direction and the vertical direction of a compressor. The X-axis, the Y axis and the Z-axis are perpendicular to one another.

### (First Embodiment)

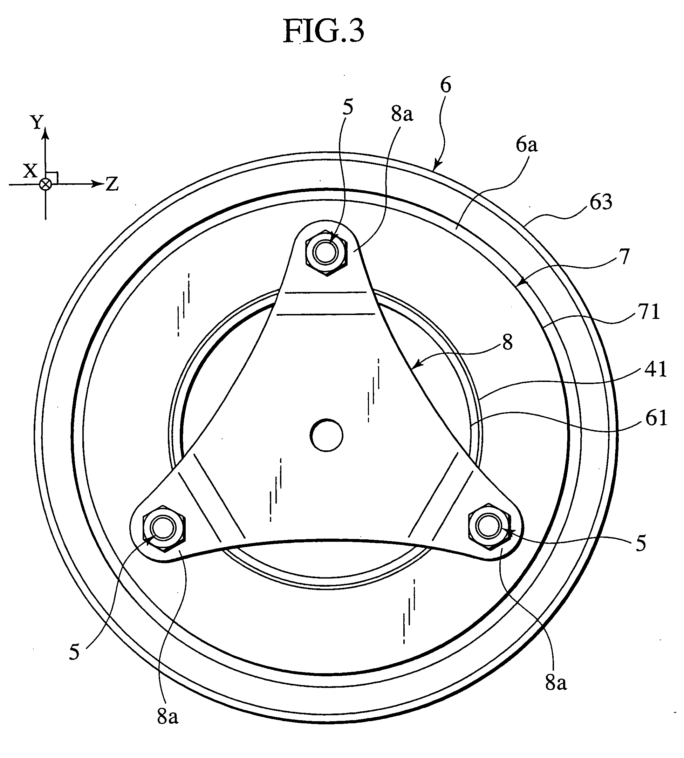

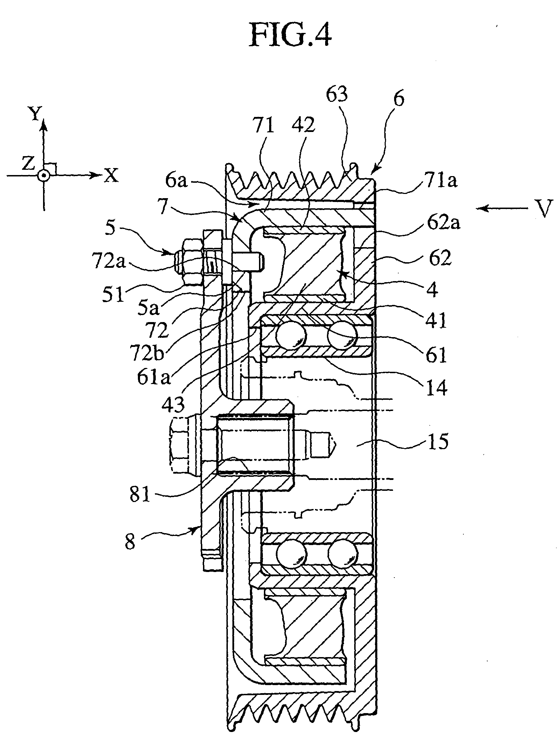

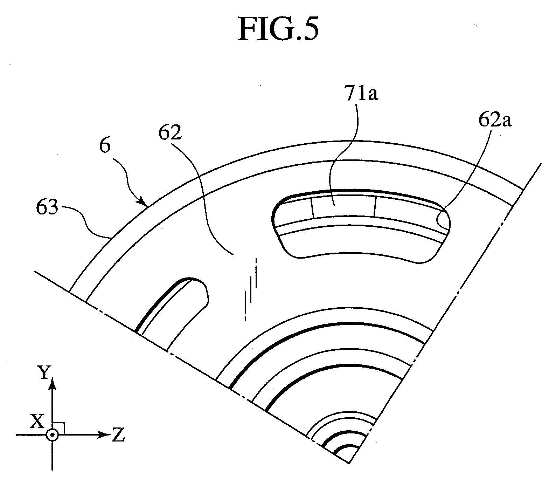

The first embodiment will be described referring to FIGS.3 to 5. The same members as those of the components of the power transmission shown in FIGS.1 and 2 are given the same numerals as those of the corresponding members therein.

A power transmission is comprised of a damper 4, shear pins 5, a pulley 6, a torque transmission member 7 and a driver 8.

The pulley 6 is rotated by torque transmitted via a belt (not shown in the figures) from an engine. The pulley 6 includes a hub 61, a web 62 and a belt-wound portion 63. The hub 61 is formed into the shape of a cylinder and coaxial with an input shaft 15 of a compressor. The web 62 is formed integrally on an external circumferential surface of a first end portion (on the +X side) of the hub 61 and also formed into the shape of an annular ring extending outward in the radial direction of the hub 61. The belt-wound portion 63 is formed integrally on an edge of the external circumference of the web 62. The belt-wound portion 63 is formed into the shape of a cylinder and coaxial with the hub 61. Further, the belt-wound portion 63 has an external circumferential surface on which a plurality of V-grooves for winding a belt thereon is formed. The pulley 6 has an annular recess 6a, which is formed out of an outer surface of the hub61, an end surface on the -X side of the web 62 and an inner surface of the belt-wound portion 63. The recess 6a is open in the -X direction.

The torque transmission member 7 includes a cylindrical portion 71 and a rib 72. The cylindrical portion 71 has a first end portion (on the +X side) to be inserted into the interior of the recess 6a, and is coaxial with the hub 61. The rib 72 is formed into the shape of an annular ring and has a first end portion integrally connected to a second end portion (on the -X side) of the cylindrical portion 71 and a second end portion bending inward in the radial direction of the cylindrical portion 71. The second end portion of the rib 72 is located in the vicinity of a second end portion (on the - X side) of the hub 61 so as to close an opening of the recess 6a.

The damper 4 is disposed between the pulley 6 and the torque transmission member 7 and absorbs deviation between the number of revolutions of the engine and that of the compressor. The damper 4 includes circular rings 41, 42 and an elastic rubber 43. The elastic rubber 43 is formed into the shape of a cylinder and disposed in the interior of the recess 6a. The circular rings 41, 42 are connected to an inner surface and an outer surface of the elastic rubber 43, respectively. An assembly of the circular rings 41, 42 and the elastic rubber 43 is forcibly inserted between the hub 61 and the cylindrical portion 71. The circular rings 41, 42 and the elastic rubber 43 are coaxial with the hub 61. According to the above constitution, the elastic rubber 43 is fixed to the interior of the recess 6a via the circular rings 41, 42 and connects the pulley 6 to the torque transmission 7.

During inserting step of the assembly, a tool for forcibly inserting the assembly between the hub 61 and the cylindrical portion 71 is inserted through an opening portion 72b of the rib 72. Therefore, a diameter of the opening portion 72b of the rib 72 is larger than that of an opening portion 61a of the hub 61.

The shear pin 5 fixes the torque transmission member 7 to the driver 8 by being screwed into the nut 51. A parallel portion 5a of the shear pin 5 is fitted into a through-hole 72a formed in the rib 72. When the engine or the compressor is overloaded, the parallel portion 5a will be sheared off.

The driver 8, as shown in FIG.3, is a flat plate having an end surface in the shape of an approximately equilateral triangle. Each side of the driver 8 is curved gradually toward the center of gravity of the driver 8. The shear pin 5 is disposed at each of the three vertex portions 8a of the driver 8. The driver 8 is disposed parallel to the Y-Z plane and on the -X side of the hub 61. Through the center of gravity of the driver 8 formed is a coupling hole 81.

Stopper holes 62a are formed in outer edge portions of the web 62 opposite to the vertex portions 8a (3 places) of the driver 8. Stopper projections 71a are formed in the first end portions of the cylindrical portion 71 opposite to the stopper holes 62a. The stopper projection 71a extends from the first end portion of the cylindrical portion 71 toward the +X side, and is inserted into the stopper hole 62a. In an ordinary state of operations, the stopper projection 71a is loosely received in the stopper hole 62a and does not abut an open edge of the stopper hole 62a.

The hub 61 is rotatably supported by the housing of the compressor via a bearing 14. The driver 8 is spline-coupled with the input shaft 15 of the compressor via the coupling hole 81. Specifically, the compressor is a coolant compressor for use in refrigeration cycles of an automobile air conditioner.

Next, functions of the damper 4 will be described in details. Since the engine may be rotated owing to combustion of gasoline, the number of revolutions per unit time of the engine is not constant but always fluctuates. The compressor keeps the number of revolutions at a constant value due to inertia when driven by rotations of the engine. Therefore, the number of revolutions of the engine is different from the number of revolutions of the compressor. Deviation of the number of revolutions causes fluctuation of a tension loaded on a belt, resulting in occurrence of squeaks of the belt or reduction in the lifetime of the belt. In order to solve this problem, the damper 4 is disposed between the pulley 6 and the torque transmission member 7 to absorb torsion in the direction of rotation of the pulley 6.

Next, fracture mechanism of the shear pin 5 will be described in details. The rotation of the engine drives a coolant compressor, a power steering pump, a dynamo, water pump, etc by means of the belt. Once the rotation of the input shaft 15 of the compressor stops for some reason, the pulley 6 is unable to rotate. This leads to stoppage of all the auxiliary units for running. In order to solve this problem, the shear pin 5 is fixed to both the torque transmission member 7 and the driver 8, and separates the torque transmission member 7 from the driver 8 when the engine or the compressor is overloaded.

The torque transmission member 7 and the driver 8 are unable to rotate as the input shaft 15 stops. On the other hand, the pulley 6 continues to rotate by the driving power of the belt without being influenced by stoppage of the input shaft 15. In such a state, the damper 4 is twisted greatly in the direction of rotation of the pulley 6 and the stopper projection 71a abuts an open edge of the stopper hole 62a. Further, when the damper 4 is twisted in the direction of rotation of the pulley 6, the parallel portion 5a of the shear pin 5 is sheared off. As a result of the shearing off, the torque transmission member 7 is separated from the driver 8, and the pulley 6 turns free to rotate. Therefore, damage to the damper 4 can be avoided.

Further, functions of the stopper projection 71a and the stopper hole 62a will be described in details. Once the damper 4 is twisted greatly in the direction of rotation of the pulley 6, the stopper projection 71a abuts an open edge of the stopper hole 62a. This allows the stopper projection 71a to confine the fractured site of the power transmission 7 only to the shear pin 5 and to stabilize a fracture load applied to the shear pin 5. In the case where the stopper projection 71a and the stopper hole 62a are not disposed, the damper 4 is liable to be broken before the shear pin 5 is sheared off because the fracture load is applied in series to the damper 4 and shear pin 5. Further, since the fracture load is dispersed between the shear pin 5 and the damper 4, a part of the fracture load is absorbed in the damper 4. Therefore, the fracture load applied to the shear pin 5 turns unstable.

The power transmission constituted in the manner above has the following features.

Since the damper 4 is disposed in the interior of the recess 6a of the pulley 6, the power transmission has a shorter length in the axial direction thereof than those of conventional power transmissions.

Torque of the engine is transmitted via the belt first to the belt-wound portion 63, then sequentially to the web 62, the hub 61, the damper 4, the torque transmission member 7, the shear pin 5, the driver 8 and the input shaft 15 of the compressor. Since the difference in the number of revolutions occurred between the engine and the compressor is absorbed in the damper 4, smooth rotational movement and reduction in noise of the engine and the compressor can be realized.

Once the damper 4 is twisted greatly in the direction of rotation of the pulley 6, the stopper projection 71a abuts an open edge of the stopper hole 62a and then the shear pin 5 is sheared off. Consequently, the stopper projection 71a surely protects the damper 4 from damage to lengthen the life of the damper 4.

When a large amount of torque is inputted from the engine to the pulley 6, the torque is transmitted directly from the pulley 6 to the torque transmission member 7 and therefore the shear pin 5 is sheared off without damaging the damper 4. Thus, the large amount of torque is prevented from being transmitted to the compressor, and fracture of the coolant compressor can be avoided.

Since the shear pin 5 is sheared off to rotate the pulley 6 freely when the input shaft 15 of the compressor stops rotating, there is no obstacle to the torque transmission from the engine to the other auxiliary units for running.

### (Second Embodiment)

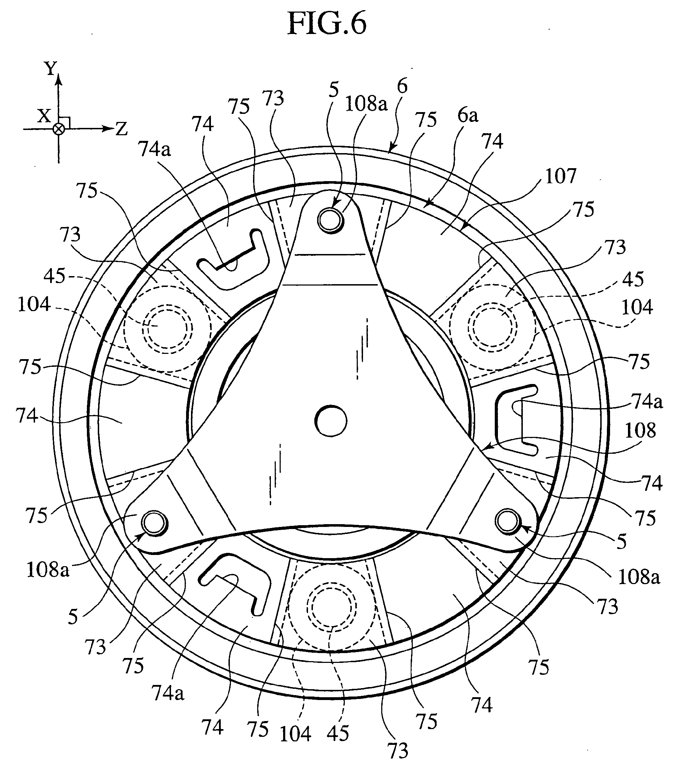

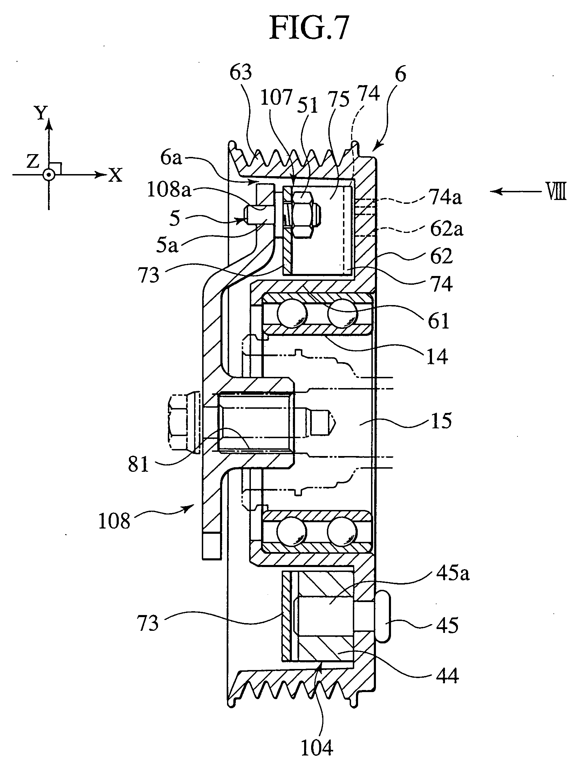

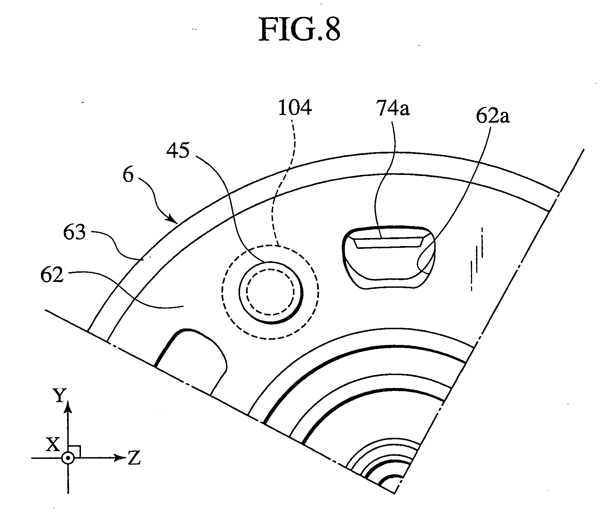

The second embodiment will be described referring to FIGS. 6 to 8. The same members as those of the first embodiment are given the same numerals as those of the corresponding members therein. The second embodiment is different from the first embodiment in the structure of a damper 104, a torque transmission member 107 and a driver 108.

The torque transmission member 107 has top plate portions 73, base plate portions 74 and side plates 75, and is disposed in a recess 6a of a pulley 6. The top plate portions 73 is disposed in an open portion (on the -X side) of the recess 6a and covers the open portion. Each base-plate portion 74 is formed in the same size as that of each top plate portion 73 and disposed at the bottom portion (on the +X side) of the recess 6a. The top plate portions 73 and the base plate portions 74 are disposed alternately along the circumferential direction of the recess 6a. In the present embodiment, the number of the top plate portions 73 is six and the number of the base plate portions 74 also is six. Each top plate portion 73 is connected to the adjacent base plate portions 74 via the side plates 75. Each side plate 75 is perpendicular to both the top plate portion 73 and the base plate portion 74 along the X-axis.

As shown in FIG.6, each shear pin 5 is fixed to one of the top plate portions 73, which is provided every 120° in the circumferential direction of the open portion of the recess 6a, and also fixed to the driver 108 by being screwed into a nut 51. The nut 51 is disposed on an end surface on the + X side of the top plate portion 73 (in the interior of the recess 6a). A parallel portion 5a of the shear pin 5 is fitted into a through-hole 108a formed in the driver 108.

The driver 108 is disposed nearly parallel to the Y-Z plane and on the -X side of the pulley 6. The driver 108 is a board having an end surface in the shape of a nearly equilateral triangle. Each side of the driver 108 is curved gradually toward the center of gravity of the driver 108. Each vertex portion 108a of the driver 108 is located nearer to the pulley 6 (on the +X side) than the central portion of the driver 108 is. The shear pin 5 is disposed at each of the three vertex portions 108a of the driver 108.

The damper 104 is a cylindrical elastic rubber 44. The damper 104 is disposed in a space which is formed out of the end surface on the +X side of the top plate portion 73 to which the shear pin 5 is not fixed and the side plates 75, 75 provided on both sides of the top plate portion 73. The damper 104 abuts the top plate portion 73. The damper 104 is sandwiched between the side plates 75, 75. The damper 104 is fixed to a web 62 of the pulley 6 by a fixing pin 45.

The fixing pin 45 is fixed to the web 62 by caulking. The elastic rubber 44 is fixed to the web 62 by inserting a parallel pin portion 45a of the fixing pin 45 into an opening of the damper 104.

A stopper projection 74a is integrally formed on the base plate portion 74, which is adjacent to the top plate portion 73 fixed to the driver 108 clockwise viewing from the -X side and to the top plate portion 73 fixed to the web 62 via the damper 104 counterclockwise viewing from the -X side. Additionally, the base plate portion 74 having the stopper projection 74a is disposed every 120° in the recess 6a (refer to FIG.6). A stopper hole 62a is formed in the outer edge portion of the web 62 opposite to each stopper projection 74a. The stopper projection 74a is inserted into the stopper hole 62a.

The power transmission constituted in the manner above has the following features in addition to the features of the first embodiment.

Since the damper 104 and the nut 51 are disposed in the recess 6a of the pulley 6, the power transmission has a shorter length in the axial direction thereof than those of the power transmission of the first embodiment.

Since consumption of rubber in the damper 104 is smaller than that in the damper of the first embodiment, the production cost can be reduced.

Also, since the torque transmission member 107 is loosely engaged with the recess 6a of the pulley 6, a step of assembling the power transmission into an engine can be separated from a step of fixing the power transmission member 107 to the driver 108. Therefore, setting up of the shear pin 5 can be done surely and also securely.

### (Third Embodiment)

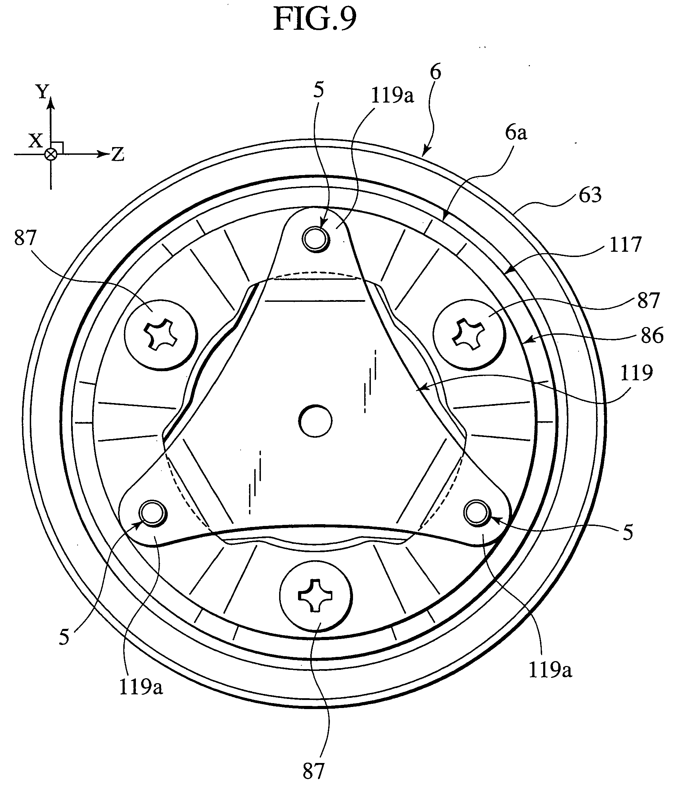

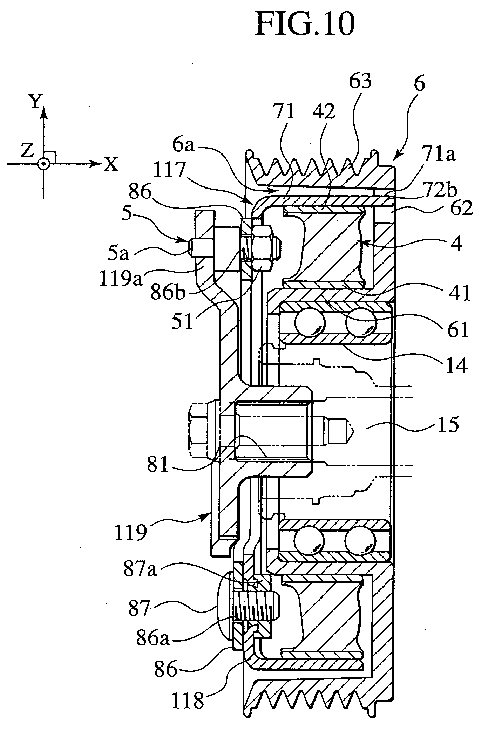

The third embodiment will be described referring to FIGS.9 to 10. The same members as those of the first embodiment are given the same numerals as those of the corresponding members therein. The third embodiment is different from the first embodiment in that an intermediate member 86 is provided in between a rib 118 and a driver 119, and in the structure of the rib 118 of a torque transmission member 117, and also in the structure of the driver 119.

The intermediate member 86 is formed into the shape of an annular ring. Three through-holes 86a are formed in an end surface of the intermediate member 86, every 120° in the circumferential direction of the intermediate member 86. A screw 87 is inserted into each of the through-holes 86a. Three through-holes 86b are formed in the end surface of the intermediate member 86. Each through-hole 86b is 60° apart from each through-hole 86a in the circumferential direction of the intermediate member 86. A shear pin 5 is inserted into each of the through-holes 86b and fixed to it by a nut 51. The portion at which the through-hole 86a of the intermediate member 86 is formed extends outward (in the -X direction) slightly corresponding to the shape of the rib 118 of the torque transmission member 117.

The rib 118 is formed into the shape of an annular ring and has a first end portion integrally connected to a second end portion (on the -X side) of the cylindrical portion 71 and a second end portion curving inward in the radial direction of the cylindrical portion 71. The second end portion of the rib 118 opposite to the through-hole 86a extends slightly outward (in the -X direction) so as to assure the space for disposing a nut 87a into which the screw 87 is screwed to fix the intermediate member 86 to the rib 118. Also, the second end portion of the rib 118 opposite to a vertex portion 119a of the driver 119 is located in the vicinity (on the +Y side) of a circular ring 42 in order to secure space for receiving the nut 51 for fixing the shear pin 5 to the intermediate member 86.

The driver 119 is disposed nearly parallel to the Y-Z plane and on the -X side of the pulley 6. The driver 119 is a board having an end surface in the shape of a nearly equilateral triangle. Each side of the driver 119 is curved gradually toward the center of gravity of the driver 119. Each vertex portion 119a of the driver 119 is located farther from the pulley 6 (on the -X side) than the central portion of the driver 119 is. Thus, when the pulley 6 rotates freely during stoppage of the driver 119 due to shearing off of the shear pin 5, interference between the vertex portion 119a of the driver 119 and a head portion of the screw 87 can be avoided. The shear pin 5 is disposed at each of the three vertex portions 119a of the driver 119.

The power transmission constituted in the manner above has the following features in addition to those of the first embodiment.

Since the intermediate member 86 is fixed to the torque transmission member 117 with the screw 87 and also fixed to the driver 119 with the shear pin 5, a step of assembling the power transmission into an engine can be separated from a step of screwing the nut into the shear-pin 5. Therefore, setting up of the shear pin 5 can be done surely and also securely.

### (Fourth Embodiment)

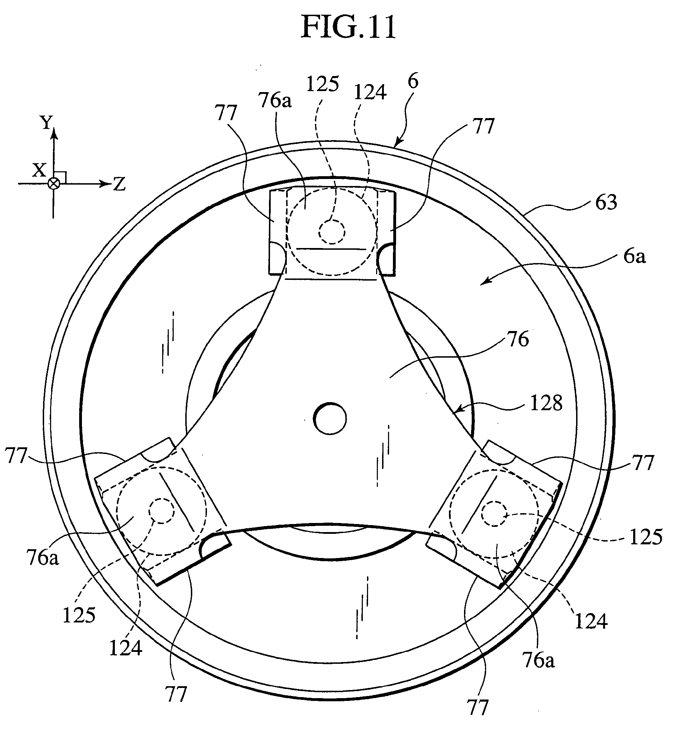

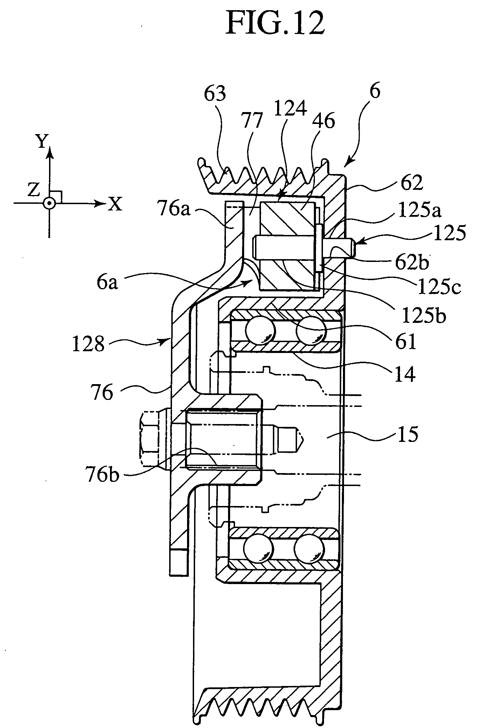

The fourth embodiment will be described referring to FIGS. 11 to 12. The same members as those of the first embodiment are given the same numerals as those of the corresponding members therein. The fourth embodiment is different from the first embodiment in the structure of a damper 124, a shear pin 125, and a driver 128. Further, the former is different from the latter in that the damper 124 performs the function of the torque transmission member 7.

The driver 128 is disposed nearly parallel to the Y-Z plane and on the -X side of the pulley 6. The driver 128 includes a plate-like portion 76 and three pairs of side plate portions 77, 77. The plate-like portion 76 is a board having an end surface in the shape of a nearly equilateral triangle. Each side of the plate-like portion 76 is curved gradually toward the center of gravity of the plate-like portion 76. Each vertex portion 76a of the plate-like portion 76 is located nearer (on the +X side) to the pulley 6 than the central portion of the plate-like portion 76 is. At the center of gravity of the plate-like portion 76 formed is a coupling hole 76b to be coupled with an input shaft 15 of a compressor. The pair of side plate portions 77, 77, which are spaced in the circumferential direction of the driver 128, are provided integrally and vertically at an end portion on the +X side of each vertex portion 76a of the plate-like portion 76. The side plate portions 77, 77 are located in an open portion of a recess 6a of the pulley 6.

The damper 124 is a cylindrical elastic rubber 46. A movement of a first end portion (on the -X side) of the damper 124 is regulated by the vertex portion 76a of the plate-like portion 76. A second end portion (on the +X side) of the damper 124 is fixed to a web 62 via the shear pin 125. The damper 124 performs as the torque transmission member 7 because it transmits torque from the pulley 6 to the driver 128.

The shear pin 125 comprises a parallel portion 125a, a parallel pin portion 125b, and a flange portion 125c. The parallel portion 125a is fitted into a through-hole 62b formed in an outer edge portion of the web 62. Additionally, the parallel portion 125a is sheared off when overloaded. The parallel pin portion 125b is formed coaxially with the parallel portion 125a. The parallel pin portion 125b is inserted into an opening of the elastic rubber 46 to fix the damper 124 to the web 62. The flange portion 125c is provided between the damper 124 and the web 62 to connect the parallel portion 125a and the parallel pin portion 125b integrally. When a large amount of torque is inputted from the engine to the pulley 6, the flange portion 125c of the shear pin 125 abuts the side plate portion 77 of the driver 128 and then the shear pin 125 is sheared off.

The power transmission constituted in the manner above has the following features in addition to those of the first embodiment.

Since the damper 124 and the shear pin 125 are disposed in the recess 6a of the pulley 6, the power transmission has a shorter length in the axial direction thereof than those of the power transmission of the first embodiment.

In comparison with the power transmissions of the first, second, and third embodiment, since the damper 124 performs the function of the torque transmission member 7, the torque transmission member 7 can be saved to keep the production cost lower.

## Claims

1. A power transmission comprising:
a pulley rotated by torque transmitted from a driving power source,
wherein the pulley having a cylindrical hub connected to a housing of a compressor therein, an annular web extending outward from an outer surface of the hub, and a cylindrical belt-wound portion extending from an external circumferential edge of the web along the axial direction of the hub;
a damper fixed to the pulley and disposed in the interior of a recess which is formed out of an outer surface of the hub, an end surface of the web and an inner surface of the belt-wound portion; and
a polygonal driver connected to the damper and fixed to an input shaft of the compressor at the center of gravity thereof,
wherein the recess is open towards the driver.

2. The power transmission according to claim 1, wherein the damper is an annular elastic member.

3. The power transmission according to claim 2, further comprising:
a torque transmission member having
an annular rib extending along the radial direction of the hub and connected to vertex portions of the driver and
a cylindrical portion extending from an external circumferential edge of the rib along the axial direction of the hub;
wherein the damper is sandwiched between the inner surface of the cylindrical portion and the outer surface of the hub.

4. The power transmission according to claim 3, wherein an inner diameter of the rib is larger than an outer diameter of the hub.

5. The power transmission according to claim 3, further comprising:
a first circular ring connected to an inner surface of the damper; and
a second circular ring connected to an outer surface of the damper,
wherein an assembly of the damper, the first circular ring and the second circular ring is forcibly inserted between the hub and the cylindrical portion.

6. The power transmission according to claim 3, further comprising:
a stopper projection extending from an end portion of the cylindrical portion opposite to the vertex portions of the driver; and
a stopper hole portion formed in the pulley opposite to the stopper projection and loosely receiving the stopper projection.

7. The power transmission according to claim 6, wherein the rib is connected to the vertex portion of the driver by a shear pin.

8. The power transmission according to claim 7, wherein the damper twists when the number of revolutions of the driving power source is different from that of the input shaft of the compressor.

9. The power transmission according to claim 8, wherein the stopper projection abuts an inner surface of the stopper hole portion as the damper twists.

10. The power transmission according to claim 9, wherein the shear pin is sheared off by large torsion of the damper.

11. The power transmission according to claim 2, further comprising
a torque transmission member having
an annular rib extending along the radial direction of the hub and
a cylindrical portion extending from an external circumferential edge of the rib along the axial direction of the hub; and
an intermediate member disposed between the driver and the rib and connected to the vertex portions of the driver and the rib,
wherein the damper is sandwiched between the inner surface of the cylindrical portion and the outer surface of the hub.

12. The power transmission according to claim 11, wherein the intermediate member is connected to the vertex portions by a shear pin.

13. The power transmission according to claim 12, further comprising:
a nut for connecting the shear pin to the intermediate member,
wherein the nut is disposed in the interior of the recess.

14. The power transmission according to claim 11, wherein the intermediate member is connected to the rib by a screw.

15. The power transmission according to claim 11, wherein a position where the intermediate member and the rib are fixed is displaced from a position where the intermediate member and the vertex portions are fixed in the circumferential direction of the intermediate member.

16. The power transmission according to claim 11, wherein the vertex portion is located farther from the pulley than the center of gravity of the driver is.

17. The power transmission according to claim 1, wherein the damper is a cylindrical elastic member.

18. The power transmission according to claim 17, further comprising:
a torque transmission member having:
a plurality of first top plate portions disposed in an open portion of the recess of the pulley and fixed to the vertex portion of the driver;
a plurality of second top plate portions disposed in an open portion of the recess of the pulley and abutting to the damper, wherein each second top plate portion is formed in the same size as that of each first top plate portion;
a plurality of base plate portions disposed at a bottom portion of the recess, wherein each base plate portion is formed in the same size as that of each first top plate portion, and the first top plate portion and the second top plate portion are disposed above both sides of the base plate portion alternately along the circumferential direction of the recess;
a plurality of first side plate connecting the first top plate portion to the base plate portion which is adjacent to the first top plate portion; and
a plurality of second side plate connecting the second top plate portion to the base plate portion which is adjacent to the second top plate portion,
wherein the damper is sandwiched between the first side plate and the second side plate.

19. The power transmission according to claim 18, further comprising:
a stopper projection extending from an end portion of the base plate portion; and
a stopper hole portion formed in the pulley opposite to the stopper projection and loosely receiving the stopper projection.

20. The power transmission according to claim 19, wherein the stopper projection is disposed in every other base plate portion.

21. The power transmission according to claim 18, wherein the first top plate portions are connected to the vertex portion of the driver by a shear pin.

22. The power transmission according to claim 21, further comprising:
a nut for connecting the shear pin to the top plate portion, wherein the nut is disposed in the interior of the recess.

23. The power transmission according to claim 18, wherein the damper is connected to the pulley by a fixing pin.

24. The power transmission according to claim 18, wherein the vertex portion of the driver is located nearer to the pulley than the center of gravity of the driver is.

25. The power transmission according to claim 21, further comprising:
a pair of side plate portions disposed on the vertex portion of the driver for sandwiching the damper between them.

26. The power transmission according to claim 25, wherein the damper is connected to the pulley by a shear pin.

27. The power transmission according to claim 26, wherein the shear pin comprises:
a parallel portion to be inserted into a through-hole of the pulley;
a parallel pin portion to be inserted into an opening of the damper; and
a flange portion connecting the parallel portion to the parallel pin portion.

28. The power transmission according to claim 27, wherein the vertex portion of the driver is located nearer to the pulley than the center of gravity of the driver is.

29. A power transmission apparatus comprising:
a pulley member (6) for receiving a rotational torque; and
a driver (8; 108; 119; 128) for driving a shaft (15), the arrangement being such that the rotational torque received by the pulley can be transmitted to the driver, the apparatus further comprising at least one damping member (4; 104; 46) disposed in an axially recessed portion (6a) of the pulley member for damping the transmission of torque between the pulley and the driver.
